# EUROPEAN PATENT APPLICATION

(11) **EP 2 109 281 A1**
(43) Date of publication of application: **14.10.2009**
(21) Application number: 08154392.8
(22) Date of filing: 11.04.2008
(51) Int. Cl.: H04L 29/06, H04L 12/56, G06F 21/00

(54) **Method and system for server-load and bandwidth dependent mitigation of distributed denial of service attacks**

(71) Applicant: Deutsche Telekom AG, 53113 Bonn (DE)
(72) Inventor: Roshandel, Mehran, 13591 Berlin (DE); Goldstein, Markus, 67655 Kaiserslautern (DE); Reif, Matthias, 67663 Kaiserslautern (DE); Stahl, Armin, 67663 Kaiserslautern (DE); Breue, Thomas, 67655 Kaiserslautern (DE)
(74) Representative: Vossius & Partner

(57) **Abstract**

The invention describes a method and system of protecting computer systems from attacks over a network to which the computer system is connected, the method comprising the steps of (a) monitoring requests to the computer system; (b) ordering the sender of a request in a legality ranking list depending on at least one feature being characteristic to at least one request of that sender; and (c) filtering a sender or requests from a sender depending on the place of the sender on the ranking list.

## Description

### Field of the Invention

The invention generally relates to mitigation of Distributed Denial of Service (DDoS) attacks on public available Internet services. Examples of such services include websites, Internet telephony (VoIP), FTP server, DNS, etc. In more detail, the invention relates to a method and system for resource-dependent mitigation of DDoS attacks.

### Background of the Invention

In the Internet, Distributed Denial of Service attacks (DDoS) have become a major threat today. Large scaled networks of infected PCs (bots or zombies) combine their bandwidth and computational power in order to overload a publicly available service and denial it for legal users. All public servers are basically vulnerable to DDoS attacks due to the open structure of the Internee. The bots are usually acquired automatically by hackers who use software tools to scan through the network, detecting vulnerabilities and exploiting the target machine.

The number of such DDoS incidents is steadily increasing. For example, the attacks against large e-commerce sites in February 2000 and the attacks against root DNS servers in 2003 and 2007 have drawn public attention to the problem of DDoS attacks. Today, mainly mid-sized websites are attacked by criminals in order to extort protection money from their owners without attracting too much public attention. Besides that, also Internet Service Providers (ISP) have to deal with the problem that DDoS traffic is congesting their link bandwidths.

The bot software also evolved alarmingly over time. Early tools like *TFN, Stacheldraht, Trinoo* or *Mstream* used unencrypted and hierarchically organized communication structures. Most of these tools used TCP-SYN, UDP or ICMP floods with possibly identifiable parameters. Since some of these attacks have successfully been mitigated, a new generation of bots arose. *SDBot, Agobot* or the very enhanced *Phatbot* are known representatives which use IRC as a robust and secure communication. These tools also contain methods for spreading themselves and have more sophisticated attack algorithms, which could be upgraded over the Internet. The attack traffic from those tools looks like legal traffic on the transport layer, which makes it nearly impossible to filter it effectively with standard firewalls.

Mitigating DDoS attacks at the origin or within the core of the Internet seems to be an impossible task due to the distributed and authorization-free nature of the IP based network. Approaches to achieve this objective typically rely on changing current internet protocols and are therefore not easily applicable. Ingress filtering as described in RFC 2827 (P. Ferguson and D. Senie, "Network ingress filtering: Defeating denial of service attacks which employ ip source address spoofing," United States, 2000, available at: http://rfc.net/rfc2827.html.) also helps mitigating DDoS attacks with forged source IP addresses (IP spoofing) and should be applied by every ISP. Since ingress filtering only helps other ISPs on the Internet and not the one who is actually applying it, it took quite a long time until it was setup in many places. Furthermore, Savage et al. (S. Savage, D. Wetherall, A. R. Karlin, and T. Anderson, "Practical network support for IP traceback," in SIGCOMM, 2000, pp. 295-306) suggested IP Traceback to find the source of spoofed IP addresses by probabilistically marking packets. Nowadays, IP spoofing is not that common any more in DDoS attacks, except for the last octet of an IP address.

A known system to mitigate attacks is Radware's DefensePro with the APSolute operating system (http://www.radware.com/Products/ApplicationNetworkSecurity/DefensePro.aspx). According to this system, the IP packets are examined for common striking features, for example identical packet sizes, source- and target ports etc. This system performs well in case of only a small number of attack sources, since attacker generate comparably high number of requests or in case of having identical attack packets.

Today, there is a strong need to mitigate DDoS attacks near the target, which seems to be the only solution to the problem in the current internet infrastructure. The aim of such a protection system is to limit their destabilizing effect on the server through identifying malicious requests.

Thus, Distributed Denial of Service (DDoS) attacks are today the most destabilizing factor in the global Internet and there is a strong need for sophisticated solutions.

### Summary of the Invention

According to a first aspect, the invention provides a method of protecting computer systems from attacks over a network to which the computer system is connected. The method comprises the steps of: (a) monitoring requests to the computer system; (b) ordering the sender of a request in a legality ranking list depending on at least one feature being characteristic to at least one request of that sender; and (c) filtering a sender or requests from a sender depending on the place of the sender on the ranking list.

According to a first preferred embodiment, step c) of filtering a sender or requests from a sender depending on the place of the sender on the ranking list comprises the steps of c1) determining a threshold for the ranking list to differentiate between acceptable sender and sender to be rejected; and c2) accepting a sender sending requests to the computer system or rejecting a sender depending on whether the sender is above or below the threshold.

Preferably, the threshold determined in step c1) is a dynamic threshold, for example depending on the server load or bandwidth usage of the computer system. For example, a low threshold value accepts many (too many) sender in the case of an attack, thus not necessarily preventing an overload. A threshold of zero can be considered as the normal operation mode of the system of the invention not dropping any sender. During an ongoing attack, a higher threshold will be determined. Preferably, the determination of the threshold is achieved in an adaptive process. Starting from a threshold of zero, the incoming request or sender, respectively, are monitored. If more requests are measured than the server could constantly handle (or a given bandwidth is exceeded), the threshold is raised. On the other hand, if the threshold is greater than zero and the measured requests (or bandwidth) are below the limit of the system, the threshold is lowered again. For a constant attack strength, this process converges to a limit threshold where the server operates just below its maximum acceptable load level. If the attack load varies over time, the threshold adapts to it, keeping the server always below its capacity limit.

According to a second embodiment, step c) comprises of a throttling algorithm. Either the bandwidth or the number of requests per time interval are limited for each sender. The exact value of the limit is determined corresponding to the place of the sender in the ranking list. The single limits are chosen such that their sum does not exceed the server's capacity. According to a preferred embodiment, both the first and second embodiments are combined.

The number of sender to be rejected is selected on the basis of the server load or bandwidth usage of the computer system. Thus, the determination of the (dynamic) threshold is made on the basis of the resource to be protected. The determination can be made in a passive manner (by inspection) or actively by measuring the target system. In more detail, the passive threshold determination is made by inspection of the data traffic, for example by counting connections or by monitoring the bandwidth. The active measurement can be implemented, for example, by response time- measurements of the web server of test web pages that are actively requested. For other applications, for example FTP, a passive bandwidth "measurement" is available only.

In accordance with the invention, the method encompasses that in step b) the place of each sender in the ranking list represents an estimation of the probability for the acceptability or legality of a sender. The probability of legality of a sender is determined by weighting each of the at least one characteristic feature considered and calculating a probability score value for each sender from the weighted features. It is preferred that the probabilities are learned using statistical learning methods during attack-free operation of the computer system. Preferably, for each characteristic feature a feature specific learning method and model is used.

The at least one characteristic feature is selected from the group comprising: country of origin, timing of successive requests, packet rates and number of parallel requests, time or time zone at the sender, application features (for example correctness of the URLs, logic URL sequences), history of requests from the sender, transmission volume, individual IP packet features (for example source and target IP address, quality of service (QoS), flags, (average) packet size, source and target port, TTL), or combinations thereof.

For some of the above mentioned features, e.g. country of origin or time zone simple statistical methods like density estimation by counting can be applied to estimate a probability of legality. However, most of the features can only be measured for the normal user class and require outlier detection algorithms (M. Markou and S. Singh "Novelty Detection: A review - part 1" and "Novelty Detection: A review - part 2". Signal Processing, 83(12) 2003). Features based on multiple requests, for example logic URL sequences or time series analysis require more specialized pattern recognition algorithms like ICA (P. Comon, "Independent Component Analysis, a new concept" Signal Processing, Elsevier, 36(3):287--314, April 1994.) n-grams, ARIMA or Hidden Markov Models.

A request within the meaning of the invention is preferably an IP packet, an e-mail, a DNS request, a FTP download, a VoIP call or a HTTP request.

It is a preferred feature of the invention that it protects from attacks on an application level.

According to a second aspect, the invention provides a system for protecting computer systems from attacks over a network to which the computer system is connected, the system comprising: monitoring means for monitoring requests to the computer system; ordering means for ordering the sender of a request in a legality ranking list depending on at least one feature being characteristic to at least one request of that sender; and filter means for filtering a sender or requests from a sender depending on the place of the sender on the ranking list.

### Brief Description of the Drawings

Preferred embodiments of the invention are described in more detail below with reference to the attached drawing, which is by way of example only.

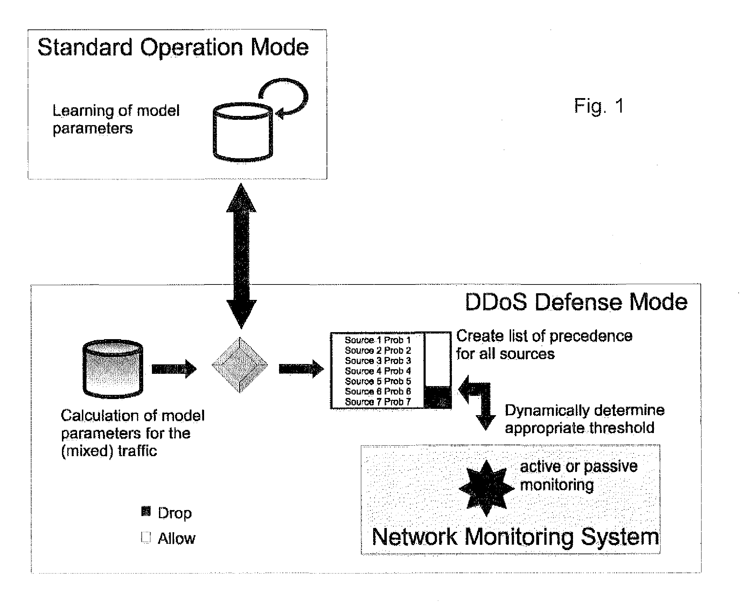

Fig. 1 shows a data flow diagram according to a preferred embodiment of the invention.

### Detailed Description

Fig. 1 shows a data flow diagram according to a preferred embodiment of the invention. As shown in Fig. 1, during normal use of the computer system, i.e. without experiencing any attack, the system undergoes a learning process to learn model parameters. Once an attack takes place, the actual data traffic is monitored and a ranking list is drawn up for the sender or sources sending a requests. According to the preferred embodiment of Fig. 1, a dynamic threshold is determined to differentiate between acceptable requests and requests to be rejected.

The invention is now described in more detail with reference to an example. The example explains the invention with reference to a small number (in total six) of sender only, for ease of explanation. However, in practice, a larger number of sender is given.

As shown in Table 1 below, a computer system receives requests from two customers (customer 1 and customer 2) and at the same time from four attacker. In the shown example, three characteristic features are considered, i.e. packet rate, country of origin of the request and time at the sender's location, and history of requests. In practice, a larger number of features is used in order to calculate a better estimate of the probability of legality.

It is assumed in this example that customer 1 is new and has never sent a request to the computer system before, and the same is assumed for the four attacker. Thus, the score for these five sender in the category "history of request" is set to 0.0. In contrast, customer 2 gets an entry of 1.0.

Furthermore, it is assumed in this example that attacker 2, 3, and 4 are located in a country/region where it is night at the time the requests are sent. Thus, at the time these requests are sent only few requests are under normal circumstances to be expected from these countries. Thus, these sender receive a low score of 0.2 in the category "time/country". Thus, the probability that the requests from attackers 2, 3, and 4 are legitimate is only 0.2.

Finally, attacker 1 and 3 send with high packet rates so that they get a low score of 0.1 in the category "packet rate". This corresponds to a probability of only 0.1 that these requests are legitimate. It is assumed in the example that also customer 2 is very active and causes high packet rates. However, customer 2 has already sent legitimate requests in the past (prior to the present attack) so that the probability that customer 2 sends a legitimate request is higher compared to attacker 1 and 3.

### This results in the following ranking list:

**Table 1**

| Place | Probability of legality | Sender | feature packet rate | feature history | feature time/country |
|---|---|---|---|---|---|
| 1 | 0.66 | customer 2 | 0.2 | 1.0 | 0.8 |
| 2 | 0.60 | customer 1 | 0.9 | 0.0 | 0.9 |
| 3 | 0.33 | attacker 1 | 0.1 | 0.0 | 0.9 |
| 4 | 0.20 | attacker 2 | 0.4 | 0.0 | 0.2 |
| 5 | 0.20 | attacker 4 | 0.4 | 0.0 | 0.2 |
| 6 | 0.10 | attacker 3 | 0.1 | 0.0 | 0.2 |

It is assumed for the system considered in this example that it can handle a maximum of three requests/connections. Thus, a threshold is set between attacker 1 and attacker 2. It is determined according to the invention that at least three sender, i.e. attacker 2 through 4, have to be blocked to avoid an overload of the system. In contrast, conventional systems that only measure the packet rates would have also erroneously blocked customer 2 due to its high packet rate. The fact that attacker 1 is not rejected is not detrimental to the system with respect to the server load.

The threshold changes dynamically because new sender may occur or sender may disappear, or the assessment of a feature a particular sender may change, or the server load may change. For example, if attacker 1 disappears, it may happen in the above ranking list that attacker 2 is no longer rejected. Moreover, the threshold may dynamically change dependent on measurement results, for example with respect to the response-time measurement so that more or less than the three sender of this particular example are accepted.

According to another embodiment which may, however, be combined with the first embodiment of determining thresholds, certain requests or sender are not completely blocked if they are below the threshold. Rather, the number of accepted requests or the provided bandwidth for a particular sender is throttled , i.e. some requests are delayed or even denied. Technically, this corresponds to an artificial limitation of the bandwidth available for this particular sender by queuing or dropping IP packets, also known as bandwidth throttling, traffic shaping or policing. In this embodiment, there is no clear cut border line (or threshold) in the ranking list. The limit rather correlates with the place of the sender in the ranking list. For example, no limit is applied to legitimate sender, whereas the number of provided bandwidth of most likely non-legitimate sender (the lowest ranks at the ranking list) is limited very strictly. In the middle of the ranking list, only moderate limits are applied. The sum of all limits depends on the server load of the computer system such that an overload is prevented.

The present invention has now been described with reference to several embodiments thereof. It will be apparent to those skilled in the art that many changes can be made in the embodiments described without departing from the scope of the present invention. Thus the scope of the present invention should not be limited to the methods and systems described in this application, but only by methods and systems described by the language of the claims and the equivalents thereof.

## Claims

1. Method of protecting computer systems from attacks over a network to which the computer system is connected, the method comprising the steps of:
a. monitoring requests to the computer system;
b. ordering the sender of one or more requests in a legality ranking list depending on at least one feature being characteristic to at least one request of that sender; and
c. filtering a sender or requests from a sender depending on the place of the sender on the ranking list.

2. The method of claim 1, wherein step c) comprises the steps of c1) determining a threshold for the ranking list to differentiate between acceptable sender and sender to be rejected; and c2) accepting a sender sending a request to the computer system or rejecting a sender depending on whether the sender is above or below the threshold.

3. The method of claim 2, wherein the threshold determined in step c1) is a dynamic threshold, depending on the server load or bandwidth usage of the computer system.

4. The method of claim 1, wherein step c) comprises of a request or bandwidth throttling algorithm, wherein the limit for a particular sender corresponds to the place of the sender in the ranking list.

5. The method of claim 4, wherein the sum of all limits for all senders is selected on the basis of the server load or bandwidth usage of the computer system.

6. The method of any of the preceding claims, wherein in step b) the place of each sender in the ranking list represents an estimation of the probability for the acceptability or legality of a sender.

7. The method of claim 3, wherein the probability of legality of a sender is determined by weighting each of the at least one characteristic feature considered and calculating a probability score value for each sender from the weighted features.

8. The method of claim 6 or 7, wherein the probabilities are derived from statistical models trained with pattern recognition methods during attack-free operation of the computer system.

9. The method of claim 8, wherein for each characteristic feature a feature specific learning method is used.

10. The method of any of the preceding claims, wherein the at least one characteristic feature is selected from the group comprising: sender IP address, country of origin, timing of successive requests, packet rates and number of parallel requests, time or time zone at the sender, application features, history of requests from the sender, transmission volume, individual IP packet features, or combinations thereof.

11. The method of any of the preceding claims, wherein a request is an IP packet, an e-mail, a DNS request, a FTP download, a VoIP call or a HTTP request.

12. The method of any of the preceding claims, wherein it protects from attacks on an application level.

13. System for protecting computer systems from attacks over a network to which the computer system is connected, the system comprising:
monitoring means for monitoring requests to the computer system;
ordering means for ordering the sender of a request in a legality ranking list depending on at
least one feature being characteristic to at least one request of that sender; and
filter means for filtering a sender or requests from a sender depending on the place of the sender on the ranking list.

## Amended claims

### Amended claims in accordance with Rule 137(2) EPC.

**1.** Method of protecting computer systems from attacks over a network to which the computer system is connected, the method comprising the steps of:
a. monitoring requests to the computer system;
b. ordering the sender of one or more requests in a legality ranking list depending on at least one feature being characteristic to at least one request of that sender; and
c. filtering a sender or requests from a sender depending on the place of the sender on the ranking list;
**characterized in that** in step b) the place of each sender in the ranking list represents an estimation of the probability for the acceptability or legality of a sender.

**2.** The method of claim 1, wherein step c) comprises the steps of c1) determining a threshold for the ranking list to differentiate between acceptable sender and sender to be rejected; and c2) accepting a sender sending a request to the computer system or rejecting a sender depending on whether the sender is above or below the threshold.

**3.** The method of claim 2, wherein the threshold determined in step c1) is a dynamic threshold, depending on the server load or bandwidth usage of the computer system.

**4.** The method of claim 1, wherein step c) comprises of a request or bandwidth throttling algorithm, wherein the limit for a particular sender corresponds to the place of the sender in the ranking list.

**5.** The method of claim 4, wherein the sum of all limits for all senders is selected on the basis of the server load or bandwidth usage of the computer system.

**6.** The method of any of claims 1 to 5, wherein the probability of legality of a sender is determined by weighting each of the at least one characteristic feature considered and calculating a probability score value for each sender from the weighted features.

**7.** The method of any of claims 1 to 6 , wherein the probabilities are derived from statistical models trained with pattern recognition methods during attack-free operation of the computer system.

**8.** The method of claim 7, wherein for each characteristic feature a feature specific learning method is used.

**9.** The method of any of the preceding claims, wherein the at least one characteristic feature is selected from the group comprising: sender IP address, country of origin, timing of successive requests, packet rates and number of parallel requests, time or time zone at the sender, application features, history of requests from the sender, transmission volume, individual IP packet features, or combinations thereof.

**10.** The method of any of the preceding claims, wherein a request is an IP packet, an e-mail, a DNS request, a FTP download, a VoIP call or a HTTP request.

**11.** The method of any of the preceding claims, wherein it protects from attacks on an application level.

**12.** System for protecting computer systems from attacks over a network to which the computer system is connected, the system comprising:
monitoring means for monitoring requests to the computer system;
ordering means for ordering the sender of a request in a legality ranking list depending on at least one feature being characteristic to at least one request of that sender; and
filter means for filtering a sender or requests from a sender depending on the place of the sender on the ranking list;
**characterized in that** the place of each sender in the ranking list represents an estimation of the probability for the acceptability or legality of a sender.
